# EUROPEAN PATENT APPLICATION

(11) **EP 0 626 184 A1**
(43) Date of publication of application: **30.11.1994**
(21) Application number: 93304150.1
(22) Date of filing: 27.05.1993
(51) Int. Cl.: A63F 9/08

(54) **A device for intellectual exercise**

(71) Applicant: Wong, Kah Foo, 52100 Kuala Lumpur (ML)
(72) Inventor: Wong, Kah Foo, 52100 Kuala Lumpur (ML)
(74) Representative: Johnson, Terence Leslie

(57) **Abstract**

A device (10) for playing intellectual games is disclosed. The device consists of a spherical body with pre-determined inter-connecting grooves (16,18), wherein slidable pins (24) are affixed. The exposed surface of the slidable pins (24) are coded to carry any desired visual representations.

## Description

This invention relates to a device for intellectual exercises and in particular to a spherical device with a plurality of grooves laid out in a pre-determined manner to accommodate slidable pin-heads. The grooves are laid out in a pre-determined manner and are dimensioned in a manner to control the sliding movement of pin-heads from one part of the spherical device to another part.

Devices for games wherein the parts of the surfaces are movable from one position to another position are generally cuboidal in shape. The parts of the surface that are moveable are generally square in shape.

It is an object of the present invention to provide a substantially spherical device wherein pin-heads can be slidably positioned to achieve any desired surface configuration of pin heads.

According to the invention there is provided a device for playing intellectual exercises wherein the device is substantially spherical in shape and comprises of a plurality of inter-connecting grooves laid out in a desired pattern and a plurality of pins slidable along the inter-connecting grooves. In a preferred embodiment the device is spherical in shape. The device includes a two Y-shaped inter-connecting grooves, one at the diametrically opposite sides of the sphere. Between these two Y-shaped grooves, are a plurality of X-shaped grooves. A plurality of slidable pins are introduced into the grooves. The exposed external surface of the pin is coded to carry any desired visual demarcations. The islets formed by the inter-connecting grooves are secured to a core body within the spherical device.

In another aspect, the device includes a web of inter-connecting grooves substantially all over the surface with at least one partially free surface area with at least one groove traversing the said free surface area and connecting the web of inter-connecting grooves. As before, a plurality of slidable pins are introduced into the grooves.
In order that the invention may be more clearly understood reference will now be made to the accompanying drawings which illustrate a preferred embodiment of the invention.

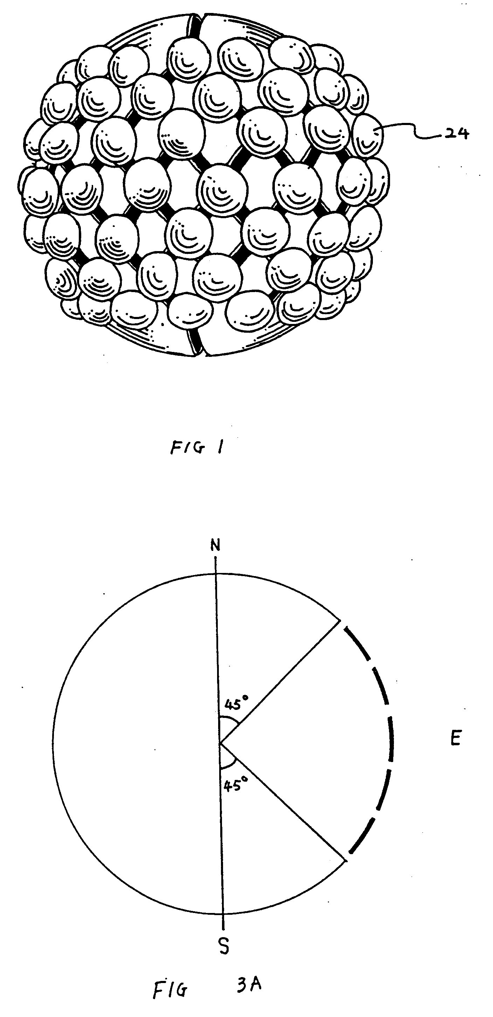

Fig. 1 illustrates a spherical device with pin-heads all assembled.

Fig. 2 illustrates side the spherical device of Fig. 1, but with the pin-heads removed to show the grooves clearly.

Fig. 3 illustrates a top view of the spherical device of Fig. 2 (the bottom view corresponds).

Fig. 3A is a diagrammatic representation of a vertical section of the spherical device.

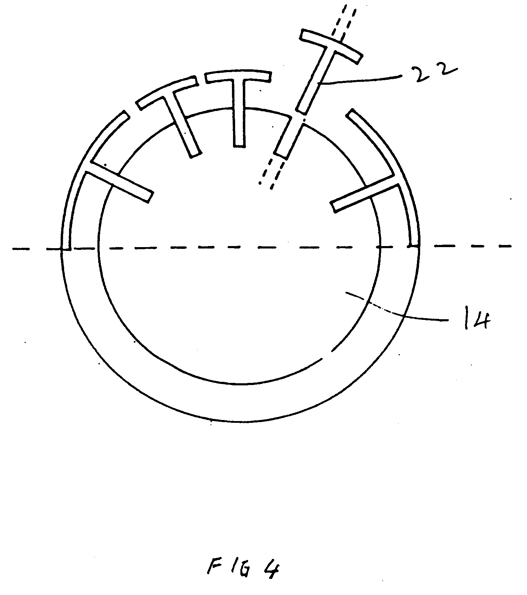

Fig. 4 illustrates a diagrammatic sectional view of the spherical device but with pin-heads removed.

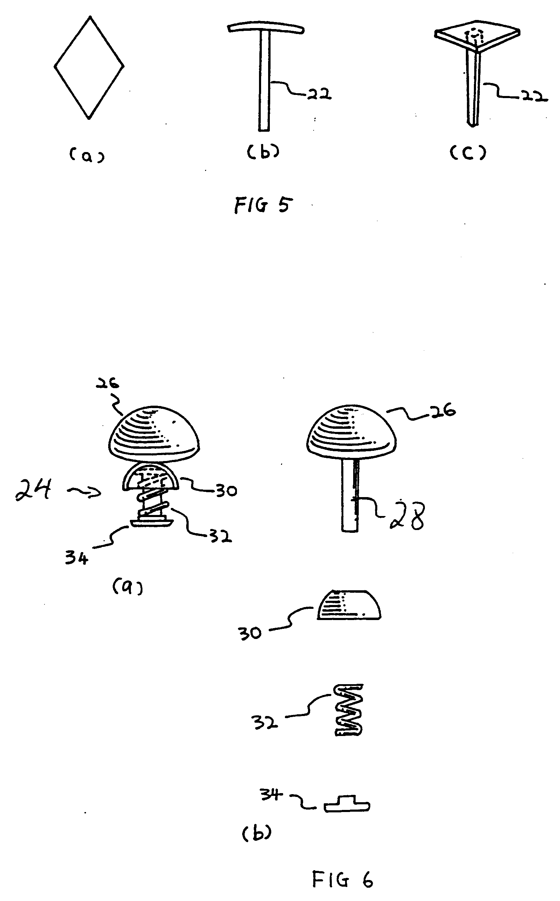

Fig. 5 illustrates a plan (a), side (b) and perspective view (c) of a section of the spherical device, which is affixed to a core receipiant body.

Fig. 6 (a) illustrates a complete assembled pin-head.

Fig. 6(b) illustrates a side view of the components of a pin-head in assembly sequence.

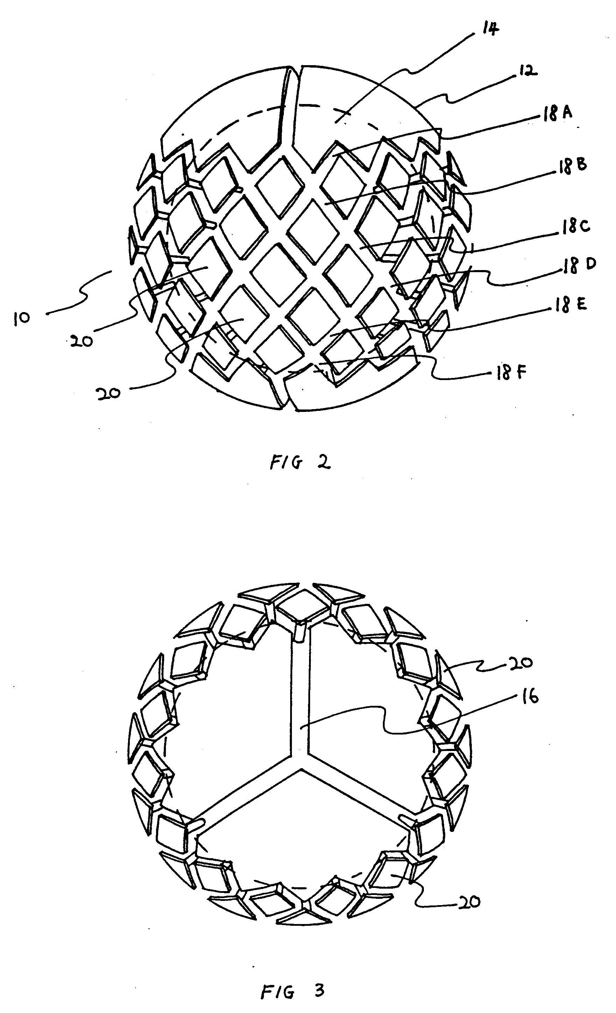

Referring to Figs. 2 and 3, there is shown a spherical device (10) with a outer shell structure (12) and an internal core body (14). For the sole purpose of describing the invention, the spherical device is zoned in the conventional manner of geographical zoning the globe. At the north and south poles of the spherical device, are provided a Y-shaped groove (16) where the arms and the legs of the groove are spaced equisdistantly apart (see Fig. 3). The grooves (16) extend substantially 45° down the vertical North-South Axis (see Fig. 3A). In another aspect of the grooves can extend at an acute angle down the vertical North-South axis. In other embodiments, the North pole or South pole region or both the North and South pole region can be a partially free surface area with only one traverse groove connecting the web of inter-connecting grooves.

Between the triangular sections formed by the grooves at the North and South Poles, are six zig-zag grooves (18A-F) linked together, and encircling the spherical device (12). Each angle of bend in the zig-zig groove is equal in size. From the diagram, it is apparent that the linking of the grooves in the manner stated results in free standing "islets"(20). The islets are of uniform size and shape throughout the spherical device. In one aspect, it will be seen there are a series of parallel columns, of five rhombus shaped islets between the upper and lower triangular sections.

The area bounded by immediately adjacent zig-zag grooves include fifteen islets. Thus the spherical device includes at least > 45 islets arranged in a pre-determined sequence a described above. Other numerical number of islets can be adopted, depending on the desired complexity and/or design of the intellectual game. The triangular sections and the islets forming the sphere are spatially configured in position by suitable means. In the embodiment described herein, the triangular sections and the islets are secured to a core body by pins (22). Alternatively the triangular sections and the islets can be inter-connected by suitable connecting means beneath the said sections and islets and spatially separated from the grooves.

It will be understood that the spherical device comprising of the core body and the islets when assembled would be substantially a smooth spherical body with each islet lying along the same spherical planar.

The invention further includes a plurality of slidable pins (24). The pins (24) are accommodated in the grooves and are slidable along the grooves. Each pin (24) consists of a head portion (26), a shaft portion (28) attached to the underside of the head. The pin (24) further includes a biasing surface (30) and a biasing means (32). Advantageously the pin may also include a restraining member (34) to secure the biasing means (32) and the biasing surface (30) in position. To facilitate ease of sliding movement the underside of the pin head is convex in shape and upper surface of the biasing surface (30) is convex in shape. The biasing means is a preferably a helical spring.

Alternatively the slidable pin can include a head portion (26) with a shaft portion to tight fitting resilient lower grip portion. To facilitate the sliding movement of the pin, the lower grip portion can be hemispherical or convex in shape; the distance between the lower surface of the pin head and the uppermost surface of the lower grip portion being dimensioned in a manner to provide a good but slidable grip on the grooves.

The slidable pins (24) are introduced into the grooves and are slidable along all the grooves including Y-shaped grooves at the North and South poles of the sphere of the traverse grooves in the alternate embodiment of the invention, to achieve any desired surface configuration of pin heads.

## Claims

1. A device (10) for playing intellectual exercises characterised in that the device is a substantially spherical body comprising of a plurality of inter-connecting grooves (16,18) laid out in a desired pattern and a plurality of pins (24) slidable along the inter-connecting grooves.

2. A device for playing intellectual exercises as claimed in Claim 1 wherein the inter-connecting grooves (16) include at least one traverse groove at least at one end of the diametrical axis of the device and a plurality of polygonal shaped grooves (18) between the traverse groove and the rest of the substantially spherical body, all linked together to provide a continuous groove.

3. A device for playing intellectual exercises a claimed in Claim 2, wherein the traverse groove (16) at one end of the diametrical axis of the device is Y or X shaped or elliptical connecting two points in the inter-connecting grooves.

4. As device for playing intellectual exercises a claimed in Claim 2, wherein the polygonal shape grooves (18) include three, four, five or six sided gives or a selection of three, four, five or six sided grooves.

5. A device for playing intellectual exercises as claimed in Claim 1 wherein each pin (24) includes a upper pin head (26) a shaft (28) a biasing surface (30), a biasing means (32) and is slidable along the inter-connecting grooves (16,18).

6. A device for playing intellectual exercises as claimed in Claim 1 wherein the pins (24) includes an upper pin head, a shaft (28) and a lower grip portion, the distance between the lower surface of the pin head and the upper most surface of the lower grip portion being dimensioned in a manner to provide a good but slidable grip on the grooves (16,18).

7. A device for playing intellectual exercises a claimed in Claims 5 and 6 wherein the pin-head is of any desired two or three dimensional shape and is capable of being coded to carry any desired visual demarcations.

8. A device for playing intellectual exercises as claimed in Claim 1 wherein the spherical body encloses a core body (14) onto which islets (20) formed by the inter-connecting grooves are secured.

9. A device for playing intellectual exercises a claimed in Claims 4 and 8 wherein the islets are of uniform, or non-uniform or a selection of uniform and uniform size and/or shape.

10. A device for playing intellectual exercises as claimed in Claim 8 wherein there are at least 45 islets (20).
